# EUROPÄISCHE PATENTSCHRIFT

(11) **EP 1 966 018 B1**
(45) Veröffentlichungstag und Bekanntmachung des Hinweises auf die Patenterteilung: **20.07.2011**
(21) Anmeldenummer: 06830100.1
(22) Anmeldetag: 23.11.2006
(51) Int. Cl.: B60W 10/06

(54) **KRAFTFAHRZEUG MIT EINEM HYBRIDANTRIEB UND VERFAHREN ZUM BETREIBEN EINES HYBRIDANTRIEBS**
MOTOR VEHICLE COMPRISING A HYBRID DRIVE, AND METHOD FOR THE OPERATION OF A HYBRID DRIVE
VEHICULE A ENTRAINEMENT HYBRIDE ET PROCEDE D'UTILISATION D'UN ENTRAINEMENT HYBRIDE

(30) Priorität: 22.12.2005 DE 102005061398
(43) Veröffentlichungstag der Anmeldung: 10.09.2008
(73) Patentinhaber: ROBERT BOSCH GMBH, 70442 Stuttgart (DE)
(72) Erfinder: STAHL, Manfred, 70439 Stuttgart (DE); DEUBLE, Peter, 71696 Moeglingen (DE); FALKENSTEIN, Jens-Werner, 73434 Aalen (DE)
(86) Internationale Anmeldenummer: PCT/EP2006/068830
(87) Internationale Veröffentlichungsnummer: WO 2007/074002

(56) Entgegenhaltungen:
- WO-A-2006/069833
- DE-A1- 10 241 018

## Beschreibung

### Stand der Technik

Die Erfindung geht aus von einem Verfahren zum Betreiben eines Hybridantriebs nach dem Oberbegriff des Anspruchs 1 und einem Kraftfahrzeug mit einem Hybridantrieb nach dem Oberbegriff des Anspruchs 10.

Kraftfahrzeuge mit Hybridantrieb sind bekannt, z.B. aus der gattungsgemäßen DE 10241018 A1. Als Hybridantrieb werden solche Antriebe bezeichnet, bei denen neben einer konventionellen Verbrennungskraftmaschine wenigstens eine Elektromaschine vorhanden ist, die mit einer Triebwelle im Antriebsstrang des Kraftfahrzeugs, je nach Ausführung eines parallelhybridischen Antriebs, kuppelbar oder fest verbunden ist und die sowohl im Generatorbetrieb als auch im Motorbetrieb arbeiten kann. Im Generatorbetrieb wird die Elektromaschine von der Verbrennungskraftmaschine angetrieben und kann so elektrischen Strom zur Versorgung von elektrischen Verbrauchern des Kraftfahrzeugs erzeugen. Im Motorbetrieb wird Strom aus der Fahrzeugbatterie zur Verfügung gestellt, um diesen in Antriebsenergie für das Kraftfahrzeug oder in Startenergie für die Seite 2

Verbrennungskraftmaschine umzuwandeln. Neben der Fahrzeugbatterie als Stromspeicher kann auch ein Schwungrad oder ein anderer Speicher für kinetische Energie vorgesehen sein, mit dem z.B. beim Bremsen freiwerdende kinetische Energie gespeichert und über die Elektromaschine an die Verbraucher im Bordnetz des Kraftfahrzeugs oder später an dessen Antriebsstrang abgegeben werden kann.

Aus der WO 2006/069833 ist ein Verfahren zum Betreiben eines Hybridfahrzeuges bekannt, wobei das Drehmoment des Verbrennungsmotors durch seine Drehzahl und zusätzlich ein Drehmoment der Elektromaschine durch ihre Drehzahl beeinflusst wird.

Im elektrischen Fahrbetrieb ist eine Drehzahlregelung der Elektromaschine insbesondere in verschiedenen Fällen notwendig. Bei einem Automatikgetriebe mit offener Wandlerkupplung und zur Öldruckversorgung eines konventionellen Automatikgetriebes ist eine Eingangsdrehzahl >0 und im elektrischen Fahrbetrieb damit, auch bei stehendem Fahrzeug, eine Elektromaschinendrehzahl >0 erforderlich. Bei einem Automatikgetriebe und offener Wandlerkupplung ist das Anfahrverhalten eines konventionellen Kraftfahrzeugs im momentengesteuerten Betrieb der Elektromaschine nur unzureichend darstellbar. Der Fahrer erwartet ein Kriechmoment beim Lösen der Bremse. Bei offener Wandlerkupplung ist dazu, auch bei stehendem Fahrzeug, eine Elektromaschinendrehzahl >0 erforderlich. Um ein dem, aus der Leerlaufregelung der Verbrennungskraftmaschine heraus, verbrennungsmotorischen Anfahren entsprechendes Verhalten sicherzustellen, muss die Elektromaschine drehzahlgeregelt betrieben werden. Bei einem Hybridfahrzeug mit manuell geschaltetem Getriebe sollte sich das Anfahrverhalten im elektrischen Betrieb nicht vom Verhalten bei laufender Verbrennungskraftmaschine unterscheiden. Der Fahrer ist gewohnt, per Anfahrkupplung gegen ein drehzahlgeregeltes Aggregat anzufahren. Ein Anfahren im momentengesteuerten Betrieb der Elektromaschine ab Drehzahl 0, d.h. mit nicht getretener Anfahrkupplung und eingelegtem Gang, ist für den Fahrer ungewohnt und sollte vermieden werden.

Auch im hybridischen Betrieb ist eine Drehzahlregelung der Elektromaschine erforderlich. Für künftige Diagnose- und Überwachungsfunktionen wird die Verbrennungskraftmaschine durch die Elektromaschine auf eine vorgebbare Drehzahl geschleppt, z.B. bei einer Schleppmoment-Adaption im Leerlauf, wobei die Verbrennungskraftmaschine in der Schubabschaltung betrieben wird. Werden entsprechende Funktionen im Leerlaufbetrieb durchgeführt, muss die Elektromaschine die Leerlaufregelung der Verbrennungskraftmaschine übernehmen

Je nach Fahrzeug-Betriebszustand ergibt sich die Notwendigkeit, Verbrennungskraftmaschine und Elektromaschine im Verbund oder separat drehzahlgeregelt zu betrieben, wobei bei einer Drehmoment-Anforderung, z.B. durch Betätigen des Fahrpedals, ein stetiger Übergang in den momentengesteuerten Betrieb erfolgen muss.

### Vorteile der Erfindung

Es wird ein Verfahren vorgeschlagen zum Betreiben eines Kraftfahrzeugs mit einem Hybridantrieb, umfassend eine Verbrennungskraftmaschine mit einer Motorsteuerung und wenigstens eine Elektromaschine mit einer Steuereinrichtung, wobei die Elektromaschine wenigstens zeitweise drehzahlgeregelt betrieben wird und mit einer Triebwelle der Verbrennungskraftmaschine in Wirkverbindung stehen kann. Zur Drehzahlregelung der Elektromaschine wird deren Drehmoment durch deren Drehzahl oder ein daraus abgeleitetes Signal beeinflusst. Bei einer Momentenanforderung, z.B. durch den Fahrer durch Betätigen des Fahrpedals, erfolgt ein stetiger Übergang vom drehzahlgeregelten in den momentengesteuerten Bereich. Die Erfindung kann vorteilhaft in den Anwendungsfällen des elektrischen Fahrens und des hybridischen Fahrens eingesetzt werden. Beim elektrischen Fahren ist eine Trennkupplung geöffnet, der Verbrennungsmotor abgekoppelt, die Elektromaschine treibt den Antriebsstrang an. Eine Regelung der Drehzahl der Elektromaschine (Öldruckversorgung für ein konventionelles Automatikgetriebe etc.) erfolgt. Beim hybridischen Fahren sind Verbrennungsmotor und Elektromaschine aktiv und die Trennkupplung geschlossen. Eine Regelung der gemeinsamen Drehzahl von Verbrennungsmotor und Elektromaschine erfolgt durch die Elektromaschine.

In einem günstigen Verfahrensschritt wird die Drehzahlregelung in einen schnellen Anteil, z.B. einen Proportionalanteil, und einen langsamen Anteil, z.B. einen Integralanteil, aufgeteilt, wobei der Proportionalanteil in der Steuereinrichtung der Elektromaschine und der Integralanteil in einer Steuereinrichtung berechnet wird, in der ein Momentenpfad berechnet und/oder in der Momentenanforderungen, z.B. von Fahrpedal bzw. Fahrgeschwindigkeitsregler, eingelesen und/oder berechnet werden. Dort stehen die meisten der für den Übergang vom drehzahlgeregelten in den momentengesteuerten Betrieb benötigten Signale zur Verfügung. Vorzugsweise erfolgt die Berechnung des Integralariteils in der Motorsteuerung. Dadurch, dass der Proportionalanteil in der Steuereinrichtung der Elektromaschine berechnet wird, kann eine Begrenzung der Wirkung des Reglers durch Signallaufzeiten zwischen verschiedenen Steuereinrichtungen verringert werden. Eine hohe Regelgüte bzw. eine hohe Dynamik der Regelung ist erreichbar.

Günstigerweise kann der Proportionalanteil mit hoher Dynamik auf Abweichungen einer Istdrehzahl von einer Solldrehzahl reagieren, während der Integralanteil einen Übergang vom drehzahlgeregelten Betrieb in einen momentengesteuerten Betrieb der Elektromaschine steuert. Der Integralanteil kann zusätzlich zur Kompensation von Ungenauigkeiten in der Regelstrecke eingesetzt werden.

In einem günstigen Verfahrensschritt wird der Proportionalanteil auf einen Maximalwert und einen Minimalwert begrenzt, wobei sich der Minimalwert aus dem negativen Wert des Integralanteils ergibt.

Vorzugsweise werden der Integralanteil und ein gefordertes Sollmoment zum begrenzten Proportionalanteil addiert.

Günstigerweise wird bei einer Momentenanforderung der Integralanteil eingefroren und das Sollmoment entsprechend der Momentenanforderung erhöht. Mit der Erhöhung des Sollmoments steigt die Drehzahl der Elektromaschine an.

Bei steigendem Sollmoment kann ein fallender, negativer Proportionalanteil mit zunehmender Abweichung der Drehzahl von einem Drehzahl-Sollwert den eingefrorenen Integralanteil kompensieren. Durch die Begrenzung des Proportionalanteils auf den negativen Wert des Integralanteils wird eine Überkompensation des Integralanteils vermieden.

Vorteilhaft ergibt sich, sobald die Drehzahl eine Drehzahlschwelle oberhalb des Drehzahl-Sollwerts überschreitet, automatisch ein momentengesteuerter Betrieb.

Es wird ein Kraftfahrzeug mit einem Hybridantrieb vorgeschlagen, umfassend eine Verbrennungskraftmaschine mit einer Motorsteuerung und wenigstens eine, wenigstens zeitweise, drehzahlgeregelte Elektromaschine, die mit einer Triebwelle der Verbrennungskraftmaschine in Wirkverbindung stehen kann, wobei zur Drehzahlregelung ein Regler mit einem schnellen Anteil, z.B. einen Proportionalanteil, und einem langsamen Anteil, z.B. einen Integralanteil, vorgesehen ist, wobei der schnelle Anteil und der langsame Anteil in unterschiedlichen Steuereinrichtungen angeordnet sind. Durch die hardwaremäβige Aufteilung ist eine hohe Regelgüte zu erreichen.

In einer günstigen Ausgestaltung ist der Integralanteil in die Steuereinrichtung, vorzugsweise in die Motorsteuerung, integriert, in der ein Momentenpfad berechnet und/oder Momentenanforderungen eingelesen und/oder berechnet werden. Die meisten für einen momentengesteuerten Betrieb notwendigen Informationen sind in der Steuereinrichtung enthalten, in der der Integralanteil berechnet wird.

In einer günstigen Ausgestaltung ist der Proportionalanteil in die Steuereinrichtung der Elektromaschine integriert. Diese bevorzugte Hardware-Partitionierung führt zu einer geringen Schnittstellenbreite zwischen den Steuergeräten und zu einer hohen Regelgüte bzw. einer hohen Dynamik der Regelung.

### Zeichnung

Weitere Ausführungsformen, Aspekte und Vorteile der Erfindung ergeben sich auch unabhängig von ihrer Zusammenfassung in Ansprüchen, ohne Beschränkung der Allgemeinheit aus einem nachfolgend anhand von Zeichnungen dargestellten Ausführungsbeispiel der Erfindung.

Im Folgenden zeigen:
- Fig. 1 a,: b a: einen schematischen Aufbau eines bevorzugten Kraft- fahrzeugs mit einem Hybridantrieb, b: ein Beispiel mit abgekoppeltem Verbrennungsmotor beim elektrischen Fahren; und
- Fig. 2: ein Schaubild eines Signalflussdiagramms zur Drehzahl- regler-Koordination eines Hybridantriebs.

### Beschreibung des Ausführungsbeispiels

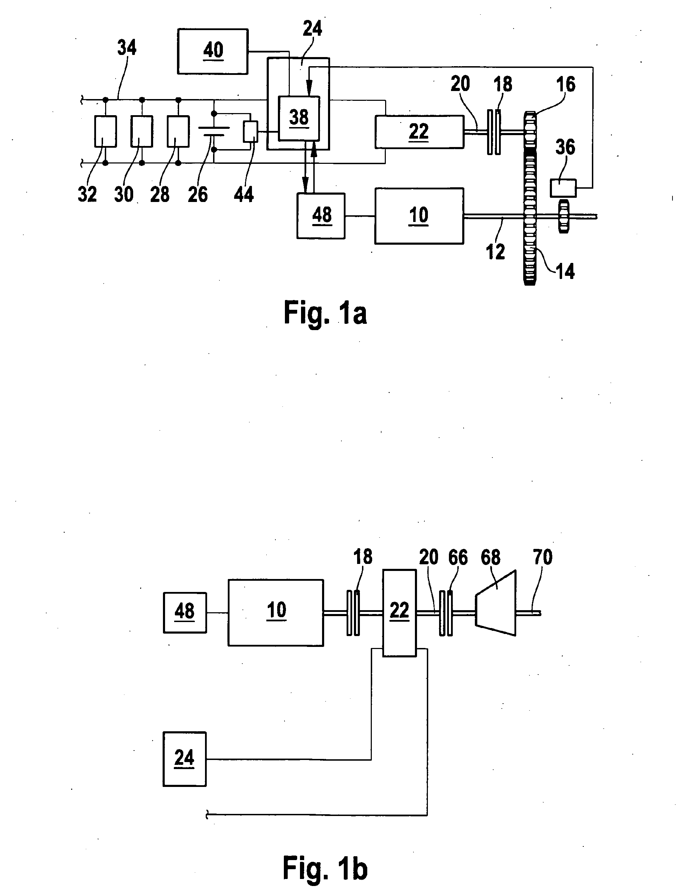

Der in Fig. 1a beispielhaft dargestellte Hybridantrieb eines bevorzugten Kraftfahrzeugs umfasst in bekannter Weise eine Verbrennungskraftmaschine 10, dessen Kurbelwelle 12 über zwei Zahnräder 14, 16 und eine insbesondere als Trennkupplung arbeitende Kupplung 18 mit der Abtriebswelle 20 einer Elektromaschine 22 des Kraftfahrzeugs kuppelbar ist. Fig. 1b zeigt beispielhaft einen Hybridantrieb zum elektrischen Fahren mit von der Elektromaschine 22 abgekoppeltem Verbrennungsmotor 10, d.h. geöffneter Kupplung 18. Der Abtrieb für den restlichen Antriebsstrang (Anfahrkupplung 66, Getriebe 68, Antriebsräder) erfolgt an der Abtriebswelle 20 der Elektromaschine 22.

Die Elektromaschine 22 weist eine Steuereinrichtung 24 auf und ist über diese Steuereinrichtung 24 mit einer Batterie 26 des Kraftfahrzeugs verbunden, die eine Mehrzahl von Verbrauchern 28, 30, 32 usw. in einem Bordnetz 34 des Kraftfahrzeugs mit Gleichstrom versorgt. Die Verbraucher 28, 30, 32 können sämtliche mit Strom betriebenen Aggregate des Kraftfahrzeugs umfassen, wie zum Beispiel die Heckscheibenheizung, das Radio, die Glühkerze und die einzelnen Leuchten der Beleuchtungsanlage. Die Steuereinrichtung 24 ist weiter z.B. mit einem Winkelsensor 36 zur Ermittlung der Drehzahl der Kurbelwelle 12 verbunden. Die Steuereinrichtung 24 ist weiter mit einem nicht dargestellten Sensor verbunden, der den Drehwinkel der Abtriebswelle 20 der Elektromaschine 22 erfasst.

Die Elektromaschine 22 dient beispielhaft als Starter-Generator für die Verbrennungskraftmaschine 10. Bei jedem Start des Kraftfahrzeugs wird sie zuerst durch Stromzufuhr von der Batterie 26 auf eine vorgegebene Drehzahl gebracht, woraufhin die Kupplung 18 geschlossen und die Verbrennungskraftmaschine 10 von der Elektromaschine 22 momentengesteuert oder drehzahlgeregelt gestartet wird. Sobald die Verbrennungskraftmaschine 10 eine vorgegebene Leerlaufdrehzahl erreicht hat, wird vom Steuergerät 24 anhand der Signale vom Winkelsensor 36 auf Startende erkannt. Anschließend kann die Verbrennungskraftmaschine 10 mit Hilfe der Elektromaschine 22 und des Steuergeräts 24 z.B. drehzahlgeregelt betrieben werden, wobei die Elektromaschine 22 dafür sorgt, dass die vorgegebene Leerlaufdrehzahl gehalten wird.

Die Steuereinrichtung 24 der Elektromaschine 22 ist mit einem Rechner 38 ausgestattet, dem von einem zentralen Bordcomputer 40 des Kraftfahrzeugs der Einschaltzustand der einzelnen Verbraucher 28, 30, 32 des Bordnetzes 34 übermittelt wird. Weiter ist der Rechner 38 mit einem Batterieregler 44 verbunden, der die augenblickliche Klemmenspannung und den augenblicklichen Ladezustand der Batterie 26 ermittelt und bei Bedarf für eine Aufladung der Batterie 26 sorgt, zum Beispiel wenn ein Ladezustand von 70 % unterschritten wird.

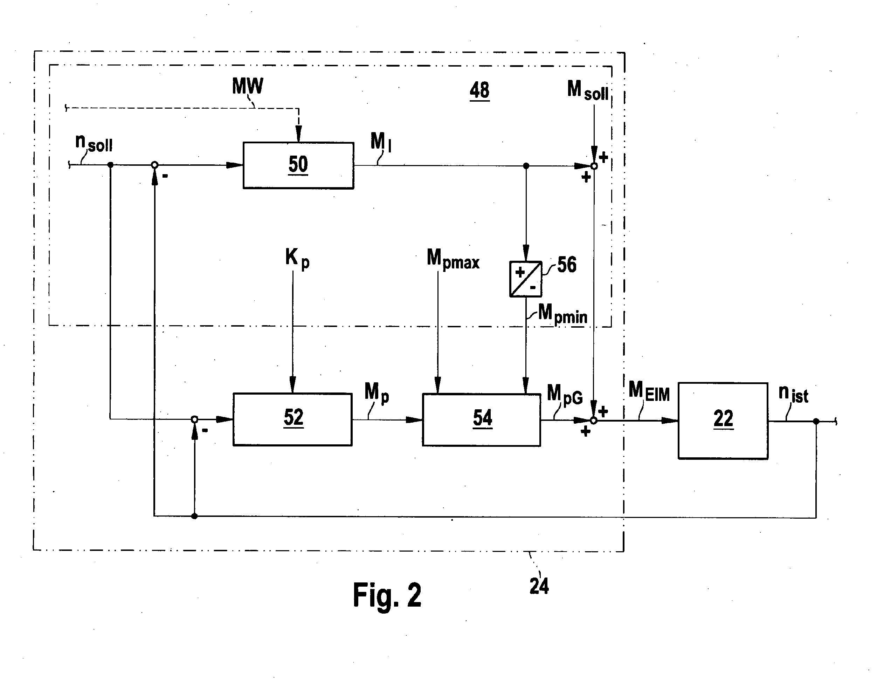

Die z.B. als Dieselmotor ausgebildete Verbrennungskraftmaschine 10 weist eine Motorsteuerung 48 auf, die mit der Steuereinrichtung 24 der Elektromaschine 22 in Verbindung steht, wie anhand eines Signalflussplans für den Übergang von dem drehzahlgeregelten Betrieb der Elektromaschine 22 zum momentengesteuerten Betrieb aus Fig. 2 ersichtlich ist. Gleiche Elemente sind mit gleichen Bezugszeichen versehen. Im Motorsteuergerät 48 wird der Momentenpfad berechnet und eine Information MW, die einen Momentenwunsch anzeigt, z.B. vom Fahrpedal bzw. Fahrgeschwindigkeitsregler, eingelesen und/oder berechnet.

Die Drehzahl nᵢₛₜ der Elektromaschine 22 wird mit einem Proportional-Integral-Regler geregelt, dessen langsamer Integralanteil Mₗ in einem Integral-Regler 50 im Motorsteuergerät 48 der Verbrennungs-kraftmaschine 10 und dessen schneller Proportionalanteil Mₚ in einem Proportionalregler 52 der Steuereinrichtung 24 der Elektromaschine 22 gerechnet werden. Der Proportional-Integral-Regler ist somit hardwaremäßig partitioniert und verteilt sich auf verschiedene Steuereinrichtungen.

Der Integralregler 50 erhält eine Momentenanforderung MW und als Vorgabe einen Sollwert nₛₒₗₗ der Drehzahl und gibt einen Integralanteil Mₗ aus.

Der Proportional-Regler 52 erhält ebenso als Vorgabe die Solldrehzahl nₛₒₗₗ sowie einen Reglerkoeffizienten Kₚ und gibt den Proportionalanteil Mₚ aus. Der Proportionalanteil Mₚ reagiert mit hoher Dynamik auf Abweichungen einer Istdrehzahl nᵢₛₜ von einer Solldrehzahl nₛₒₗₗ. Der Proportionalanteil Mₚ wird mit einem Begrenzer 54 auf einen Maximalwert Mₚₘₐₓ und einen Minimalwert Mₚₘᵢₙ begrenzt, wobei sich der Minimalwert Mₚₘᵢₙ aus dem negativen Wert des Integralanteils Mₗ ergibt, der vom Ausgang des Integral-Reglers 50 abgenommen und im Element 56 mit invertiertem Vorzeichen versehen wird. Der Integral-Anteil Mₗ und das geforderte Sollmoment Mₛₒₗₗ werden zum begrenzten Ausgangswert M_{pG} des Proportional-Reglers 52 addiert.

Ohne Momentenanforderung, d.h. ohne Betätigung des Fahrpedals bzw. Fahrgeschwindigkeitsreglers, ist das Sollmoment Mₛₒₗₗ negativ. Bei aktiver Drehzahlregelung der Elektromaschine 22 stellt sich ein positiver Integralanteil Mₗ ein, der das negative Mₛₒₗₗ kompensiert.

Bei einer Momentenanforderung, indem z.B. der Fahrer das Fahrpedal betätigt, wird der Proportionalanteil Mₗ am Ausgang des Integral-reglers 50 eingefroren. Das Sollmoment Mₛₒₗₗ erhöht sich entsprechend der Momentananforderung, z.B. bei weiterer Betätigung des Fahrpedals.

Aufgrund des erhöhten Sollmoments Mₛₒₗₗ steigt die Drehzahl nᵢₛₜ der Elektromaschine 22 an. In Folge ergibt sich ein fallender, negativer Proportionalanteil Mₚ, der mit zunehmender Abweichung der Drehzahl nᵢₛₜ von dem Drehzahl-Sollwert nₛₒₗₗ den eingefrorenen Integralanteil Mₗ kompensiert. Durch die Begrenzung des Proportionalanteils Mₚ auf den negativen Wert des Integralanteils Mₗ wird eine Überkompensation vermieden. Liegt die Drehzahl nᵢₛₜ um eine gewisse Differenz über den Drehzahl-Sollwert nₛₒₗₗ, ist die Drehzahlregelung vollständig abgelöst, und es ergibt sich automatisch ein momentengesteuerter Betrieb, bei dem gilt M_{EIM} = Mₛₒₗₗ. Der Integralanteil Mₗ steuert also einen Übergang vom drehzahlgeregelten Betrieb in einen momentengesteuerten Betrieb der Elektromaschine 22. Die Größe M_{EIM} wird der Elektromaschine 22 zugeführt, von deren Ausgang die Drehzahl nᵢₛₜ an den Integral-Regler 50 und den Proportional-Regler 52 zurückgeführt wird.

Der Reglerkoeffizient Kₚ des Proportional-Reglers 52, der Drehzahl-Sollwert nₛₒₗₗ und die Parameter der Proportionalbegrenzung im Begrenzer 54 werden in der Motorsteuerung 48 der Verbrennungskraftmaschine 10 generiert und können so durch die Fahrzeugsteuerung beeinflusst und koordiniert werden.

## Patentansprüche

1. Verfahren zum Betreiben eines Kraftfahrzeugs mit einem Hybridantrieb, umfassend eine Verbrennungskraftmaschine (10) mit einer Motorsteuerung (48) und wenigstens eine Elektromaschine (22) mit einer Steuereinrichtung (24), die wenigstens zeitweise drehzahlgeregett betrieben wird und die mit einer Triebwelle (20) der Verbrennungskraftmaschine (10) in Wirkverbindung bringbar ist, **dadurch gekennzeichnet, dass** zur Drehzahlregelung der Elektromaschine (22) deren Drehmoment durch deren Drehzahl (nᵢₛₜ) oder ein daraus abgeleitetes Signal beeinflusst wird wobei die Drehzahlregelung in einen schnellen Anteil (Mp) und einen langsamen Anteil (Mₗ) aufgeteilt wird

2. Verfahren nach Anspruch 1, **dadurch gekennzeichnet dass**
der schnelle Anteil (Mₚ) in der Steuereinrichtung (24) der Elektromaschine (22) und der langsame Anteil (Mₗ) in einer Steuereinrichtung (48) berechnet wird, in der ein *Momentenpfad berechnet und*/*oder in der Momentenanforderungen eingelesen* und/oder berechnet werden.

3. Verfahren nach einem der vorhergehenden Ansprüche, **dadurch** gekenntzeichnet dass der schnelle Anteil (Mₚ) mit hoher Dynamik auf Abweichungen einer Istdrehzahl (nᵢₛₜ) von einer Solldrehzahl (nₛₒₗₗ) reagiert.

4. Verfahren nach einem der vorhergehenden Ansprüche, **dadurch gekennzeichnet, dass** der langsame Anteil (Mₗ) einen. Übergang vom drehzahlgeregelten Betrieb in *einen momentengesteuerten Betrieb der Elektromaschine (22) steuert.*

5. Verfahren nach einem der vorhergehenden Ansprüche, **dadurch gekennzeichnet, dass** der schnelle Anteil (Mₚ) auf einen Maximalwert (Mₚₘₐₓ) und einen Minimalwert (Mₚₘᵢₙ) begrenzt wird, wobei sich der Minimalwert (Mₚₘᵢₙ) aus dem negativen Wert des langsamen Anteils (Mₗ) ergibt.

6. Verfahren nach Anspruch 5, **dadurch gekennzeichnet dass** der langsame Anteil (Mₗ) und ein gefordertes Sollmoment (Mₛₒₗₗ) zum begrenzten schnellen Anteil (M_{pG}) addiert werden.

7. Verfahren nach einem der vorhergehenden Ansprüche, **dadurch gekennzeichnet, dass** bei einer Momentenanforderung der langsame Anteil (Mₗ) eingefroren wird und das Sollmoment (Mₛₒₗₗ) entsprechend der Momentenanforderung erhöht wird.

8. Verfahren nach Anspruch 7, **dadurch gekennzeichnet, dass** bei steigendem Sollmoment (Mₛₒₗₗ) ein fallender, negativer schneller Anteil (Mₚ) mit zunehmender Abweichung der Drehzahl (nᵢₛₜ) von einem Drehzahl-Sollwert (nₛₒₗₗ) den eingefrorenen *langsamen Anteil (Mₗ) kompensiert.*

9. Verfahren nach Anspruch 8, **dadurch gekennzeichnet, dass**, sobald die Drehzahl (nᵢₛₜ) eine Drehzahlschwelle oberhalb des Drehzahl-Sollwerts (nₛₒₗₗ) überschreitet, sich ein momentengesteuerter Betrieb ergibt.

10. Kraftfahrzeug mit einem Hybridantrieb, umfassend eine Verbrennungskraftmaschine (10) mit einer Motorsteuerung (48) und wenigstens eine, wenigstens zeitweise drehzahlgeregelte, Elektromaschine (22), die mit einer Triebwelle (20) der Verbrennungskraftmaschine (10) in Wirkverbindung bringbar ist, **dadurch gekennzeichnet, dass** zur Drehzähiregelung der Elektromaschine (22) deren Drehmoment durch deren Drehzahl oder ein daraus abgeleitetes Signal beeinflusst wird, wobei für die Drehzahlregelung ein Regler mit einem schnellen Anteil (Mp) und einem langsamen Anteil (Mₗ) vorgesehen ist, wobei der schnelle Anteil (Mₚ) und der langsame Anteil (Mₗ) in unterschiedlichen Steuereinrichtungen (24, 48) angeordnet sind.

11. Kraftfahrzeug nach Anspruch 10, **dadurch gekennzeichnet, dass** der langsame Anteil (Mₗ) in die Steuereinrichtung, vorzugsweise in die Motorsteuerung (48), integriert ist, in der ein Momentenpfad berechnet und/oder Momentenanforderungen eingelesen und/oder berechnet werden.

12. Kraftfahrzeug nach einem der Ansprüche 10 oder 11, **dadurch gekennzeichnet, dass** der schnelle Anteil (Mₚ) in die Steuereinrichtung (24) der Elektromaschine (22) integriert ist

## Claims

1. Method for operating a motor vehicle having a hybrid drive, comprising an internal combustion engine (10) having a motor controller (48), and comprising at least one electrical machine (22) having a control device (24) which is operated at least temporarily in a rotation-speed-regulated manner and which can be operatively connected to a drive shaft (20) of the internal combustion engine (10), **characterized in that**, in order to regulate the rotation speed of the electrical machine (22), the torque of the said electrical machine is influenced by the rotation speed (n_{act}) of the said electrical machine or a signal derived from the said rotation speed, with the rotation speed regulation being split into a fast portion (Mₚ) and a slow portion (Mₗ) .

2. Method according to Claim 1, **characterized in that** the fast portion (Mₚ) is calculated in the control device (24) of the electrical machine (22) and the slow portion (Mₗ) is calculated in a control device (48) in which a torque path is calculated and/or in which torque requirements are read in and/or calculated.

3. Method according to either of the preceding claims, **characterized in that** the fast portion (Mₚ) reacts with high dynamics to deviations in an actual rotation speed (n_{act}) from a setpoint rotation speed (nₛₑₜ) .

4. Method according to one of the preceding claims, **characterized in that** the slow portion (Mₗ) controls a transition from rotation-speed-regulated operation to torque-controlled operation of the electrical machine (22).

5. Method according to one of the preceding claims, **characterized in that** the fast portion (Mₚ) is limited to a maximum value (Mpₘₐₓ) and a minimum value (Mₚₘᵢₙ) , with the minimum value (Mₚₘᵢₙ) being given by the negative value of the slow portion (Mₗ).

6. Method according to Claim 5, **characterized in that** the slow portion (Mₗ) and a required setpoint torque (Mₛₑₜ) are added to the limited fast portion (M_{pG}) .

7. Method according to one of the preceding claims, **characterized in that**, in the event of a torque requirement, the slow portion (Mₗ) is frozen and the setpoint torque (Mₛₑₜ) is increased in accordance with the torque requirement.

8. Method according to Claim 7, **characterized in that**, with the setpoint torque (Mₛₑₜ) increasing, a falling, negative fast portion (Mₚ) with an increasing deviation in the rotation speed (n_{act}) from a setpoint rotation speed value (nₛₑₜ) compensates for the frozen slow portion (Mₗ) .

9. Method according to Claim 8, **characterized in that** torque-controlled operation is implemented as soon as the rotation speed (n_{act}) exceeds a rotation speed threshold above the setpoint rotation speed value (nₛₑₜ) .

10. Motor vehicle having a hybrid drive, comprising an internal combustion engine (10) having a motor controller (48), and comprising at least one electrical machine (22) of which the rotation speed is at least temporarily regulated and which can be operatively connected to a drive shaft (20) of the internal combustion engine (10), **characterized in that**, in order to regulate the rotation speed of the electrical machine (22), the torque of the said electrical machine is influenced by the rotation speed of the said electrical machine or a signal derived from the said rotation speed, with a regulator with a fast portion (Mₚ) and a slow potion (Mₗ) being provided for the rotation speed regulation, with the fast portion (Mₚ) and the slow portion (Mₗ) being arranged in different control devices (24, 48).

11. Motor vehicle according to Claim 10, **characterized in that** the slow portion (Mₗ) is integrated in the control device, preferably in the motor controller (48), in which a torque path is calculated and/or torque requirements are read in and/or calculated.

12. Motor vehicle according to either of Claims 10 and 11, **characterized in that** the fast portion (Mₚ) is integrated in the control device (24) of the electrical machine (22).

## Revendications

1. Procédé de conduite d'un véhicule automobile doté d'un entraînement hybride qui comprend un moteur à combustion interne (10) doté d'une commande de moteur (48) et au moins une machine électrique (22) dotée d'un dispositif de commande (24), utilisée au moins une partie du temps avec une régulation de la vitesse de rotation et apte à être amenée à coopérer avec un arbre de sortie (20) du moteur à combustion interne (10), **caractérisé en ce que**
pour la régulation de la vitesse de rotation de la machine électrique (22), sa vitesse de rotation (nᵢₛₜ) ou un signal qui en est déduit agissent sur son couple de rotation et
**en ce que** la régulation de la vitesse de rotation est divisée en une partie rapide (Mₚ) et une partie lente (Mₗ) .

2. Procédé selon la revendication 1, **caractérisé en ce que** la partie rapide (Mₚ) est calculée dans le dispositif de commande (24) de la machine électrique (22) et la partie lente (Mₗ) dans un dispositif de commande (48) dans lequel un parcours de couple est calculé et/ou lu et/ou calculé dans les demandes de couple.

3. Procédé selon l'une des revendications précédentes, **caractérisé en ce que** la partie rapide (Mₚ) réagit avec une dynamique plus élevée à des écarts entre la vitesse de rotation effective (nᵢₛₜ) et une vitesse de rotation de consigne (nₛₒₗₗ) .

4. Procédé selon l'une des revendications précédentes, **caractérisé en ce que** la partie lente (Mₗ) commande une transition du fonctionnement à vitesse de rotation régulée à un fonctionnement à couple asservi de la machine électrique (22).

5. Procédé selon l'une des revendications précédentes, **caractérisé en ce que** la partie rapide (Mₚ) est limitée à une valeur maximale (Mₚₘₐₓ) et à une valeur minimale (Mₚₘᵢₙ), la valeur minimale (Mₚₘᵢₙ) résultant d'une valeur négative de la partie lente (Mₗ).

6. Procédé selon la revendication 5, **caractérisé en ce que** la partie lente (Mₗ) et un couple de consigne imposé (Mₛₒₗₗ) sont additionnés à la partie rapide limitée (M_{pG}) .

7. Procédé selon l'une des revendications précédentes, **caractérisé en ce qu'**en cas de demande de couple, la partie lente (Mₗ) est gelée et le couple de consigne (Mₛₒₗₗ) est augmenté en fonction de la demande de couple.

8. Procédé selon la revendication 7, **caractérisé en ce que** lorsque le couple de consigne (Mₛₒₗₗ) augmente, une partie rapide négative en décroissance (Mₚ) compense la partie lente (Mₗ) gelée lorsque l'écart entre la vitesse de rotation (nᵢₛₜ) et une valeur de consigne (nₛₒₗₗ) de la vitesse de rotation augmente.

9. Procédé selon la revendication 8, **caractérisé en ce que** dès que la vitesse de rotation (nᵢₛₜ) dépasse un seuil de vitesse de rotation situé au-dessus de la valeur de consigne (nₛₒₗₗ) de vitesse de rotation, on passe à un fonctionnement à couple asservi.

10. Véhicule automobile doté d'un entraînement hybride qui comprend un moteur à combustion interne (10) doté d'une commande de moteur (48) et au moins une machine électrique (22) à vitesse de rotation régulée au moins une partie du temps et apte à coopérer avec un arbre de sortie (20) du moteur à combustion interne (10), **caractérisé en ce que**
pour la régulation de la vitesse de rotation de la machine électrique (22), sa vitesse de rotation ou un signal qui en est déduit agissent sur son couple de rotation,
**en ce qu'**un régulateur doté d'une partie rapide (Mₚ) et d'une partie lente (Mₗ) est prévu pour la régulation de la vitesse de rotation et
**en ce que** la partie rapide (Mₚ) et la partie lente (Mₗ) sont disposées dans différents dispositifs de commande (24, 48).

11. Véhicule automobile selon la revendication 10, **caractérisé en ce que** la partie lente (Mₗ) est intégrée dans le dispositif de commande et de préférence dans la commande de moteur (48) dans laquelle un parcours de couple est calculé et/ou les demandes de couple sont lues et/ou calculées.

12. Véhicule automobile selon l'une des revendications 10 ou 11, **caractérisé en ce que** la partie rapide (Mₚ) est intégrée dans le dispositif de commande (24) de la machine électrique (22).
